# FASCICULE DE BREVET EUROPEEN

(11) **EP 1 053 781 B1**
(45) Date de publication et mention de la délivrance du brevet: **18.05.2005**
(21) Numéro de dépôt: 00401297.7
(22) Date de dépôt: 11.05.2000
(51) Int. Cl.: B01F 17/00

(54) **Compositions utilisables comme agents de surface émulsifiants et dispersants, leur préparation et leurs utilisations**
Zusammensetzungen zur Verwendung als oberflächenaktive Emulgier- and Dispergiermittel, ihre Herstellung und Verwendung
Compositions for use as surface-active emulsifying and dispersing agents, their preparation and uses

(30) Priorité: 19.05.1999 FR 9906446
(43) Date de publication de la demande: 22.11.2000
(73) Titulaire: Institut Français du Pétrole, 92852 Rueil-Malmaison Cedex (FR)
(72) Inventeur: Hillion, Gérard, 92500 Herblay (FR); Durand, Isabelle, 92500 Rueil-Malmaison (FR); Sinquin, Anne, 92000 Nanterre (FR); Velly, Marie, 78360 Montesson (FR)

(56) Documents cités:
- EP-A- 1 053 780
- FR-A- 2 768 732

## Description

L'invention concerne des compositions utilisables comme agents de surface émulsifiants et dispersants, et plus particulièrement comme additifs dispersants d'hydrates dans des effluents pétroliers, et leur préparation.

Dans la demande de brevet français FR-A-2 768 732, la demanderesse a décrit un procédé pour la fabrication d'une composition consistant en un mélange comprenant au moins des amides, des amines, des ester-amides, des ester-amines, des sels d'amines et des monoglycérides, formés à partir des acides gras monomères, dimères, trimères et/ou tétramères contenus dans une huile polyinsaturée polymérisée, ce procédé comprenant la réaction de transamidification et de transestérification d'une huile polyinsaturée polymérisée thermiquement, avec au moins un aminoalcool, utilisé en excès. Pour que la composition finale contienne des composés ester-amides, il était nécessaire de mettre en jeu des aminoalcools dont au moins une fonction amine est primaire ou secondaire. Les aminoalcools susceptibles d'être utilisés étaient alors par exemple la mono-éthanolamine, la monopropanolamine, la monoisopropanolamine, le 1-aminobutanol, le 2-amino-1-butanol, la N-méthyléthanolamine, la N-butyléthanolamine, la pentanolamine, l'hexanolamine, la cyclohexanolamine, les polyalcoolamines, ou encore les polyalcoxyglycolamines, ainsi que les polyols aminés tels que la diéthanolamine, la diisopropanolamine, ou le trihydroxyméthylaminométhane. On utilisait de préférence la diéthanolamine.

La composition obtenue pouvait être utilisée, sans aucune purification, comme agent de surface émulsifiant et dispersant, telle quelle ou après dilution avec divers solvants, comme par exemple des coupes aromatiques, divers alcools ou encore avec certains esters d'acides gras.

Il était indiqué que les compositions ainsi définies pouvaient trouver un grand nombre d'applications, par exemple comme agents émulsifiants permettant de former des émulsions huile-dans-eau ou eau-dans-huile, selon la nature de l'huile et les proportions respectives des deux constituants (le constituant hydrophile et le constituant hydrophobe). Elles pouvaient encore être utilisées comme agents dispersants de solides ou comme stabilisants de mousses dans un liquide ou dans une émulsion. Une utilisation particulière signalée consistait à former des dispersions stables de glace dans des milieux hydrocarbonés, par exemple dans des condensats légers de pétrole.

La demande de brevet français FR-A-2 768 637 décrit une autre application particulière des compositions préparées selon le procédé de la demande de brevet français FR-A-2 768 732. Cette application consiste à les utiliser comme additifs dispersants d'hydrates en suspension au sein de fluides comprenant au moins de l'eau, un gaz et un hydrocarbure liquide (dans des conditions où des hydrates peuvent se former à partir de l'eau et du gaz), de manière à en faciliter le transport.

On s'est maintenant aperçu que l'efficacité comme additifs dispersants d'hydrates des compositions préparées comme décrit dans la demande de brevet français FR-A-2 768 732 pouvaient varier selon le type d'effluent pétrolier considéré et que, si elle est excellente dans certains effluents, elle peut être moins bonne dans d'autres.

On a maintenant trouvé d'autres compositions, qui peuvent être avantageusement utilisées comme agents de surface émulsifiants et dispersants et qui présentent, comme additifs dispersants d'hydrates, une efficacité améliorée dans certains effluents pétroliers, dans lesquels les compositions préparées comme décrit dans la demande de brevet français FR-A-2 768 732 pouvaient être moins efficaces.

De telles compositions peuvent être préparées par mise en jeu d'aminoalcools présentant au moins une fonction amine tertiaire, au lieu d'aminoalcools présentant des fonctions amines primaires ou secondaires. Ces compositions n'incluent pas d'ester-amides.

Les compositions de l'invention comprennent donc au moins des composés à fonctions esters et amines sous la forme d'ester-amines, ainsi que des sels d'amines, des mono- et diglycérides, formés à partir des acides gras monomères, dimères, trimères et/ou tétramères contenus dans une huile naturelle, végétale ou animale, polyinsaturée polymérisée, et au moins un composé comportant au moins une fonction hydroxyle et au moins une fonction amine tertiaire, mais ne comprennent pas d'ester-amides, et sont obtenues par un procédé qui comprend les étapes suivantes :
a) on dispose de (ou on prépare) une huile polymérisée par polymérisation d'une huile végétale ou animale polyinsaturée ;
b) on traite éventuellement ladite huile polymérisée par entraînement à la vapeur d'eau ; et
c) on fait réagir l'huile polymérisée avec un excès d'au moins un composé comportant au moins une fonction hydroxyle et au moins une fonction amine tertiaire, en présence ou non de catalyseur.

Pour préparer les compositions de l'invention, on peut se servir d'une huile polyinsaturée polymérisée du commerce, telle que les produits connus sous les dénominations de « standolie », « stand oils » ou « bodied oils ». Dans ce cas, on effectue directement l'étape (c) du procédé, éventuellement précédée d'une étape telle que (b).

De manière différente, si dans l'étape (a) on doit préparer l'huile polymérisée, on peut partir de toute huile végétale ou animale présentant un degré de polyinsaturation suffisant pour en permettre la polymérisation par contact des chaînes grasses diéniques ou trièniques entre elles, comme c'est le cas par exemple pour l'acide linoléique et linolénique. On citera comme exemples les huile de lin, de tournesol, de carthame, de bois de chine, de pépin de raisin, de soja ou de maïs, ou certaines huiles de poisson, ainsi que toutes autres huiles possédant des teneurs élevées en acide linoléique et/ou linolénique.

L'huile de lin est préférée dans l'invention. Une composition approximative en acides gras de l'huile de lin est la suivante :
- acide palmitique : 5,5 % en poids
- acide stéarique : 3,5 % en poids
- acide oléique : 19,0 % en poids
- acide linoléique : 14,4 % en poids
- acide linolénique : 57,6 % en poids

La polymérisation d'une huile polyinsaturée peut être effectuée selon toute méthode appropriée, thermiquement ou par voie catalytique. La polymérisation par voie essentiellement thermique peut être réalisée par simple chauffage à environ 300 °C sous azote. Le temps de chauffage conditionne alors un gradient de viscosité de l'huile polymérisée, qui peut atteindre, après un temps de chauffage par exemple de 20 heures ou plus, une viscosité dynamique de 65 Pa.s à 20 °C.

La polymérisation peut également être réalisée à 280-290 °C sous pression réduite en présence d'anthraquinone ou de benzoquinone (voir Nisshin Oils Mills, Yokohama, Japan, Nagakura and Coll. (1975), 48 (4), 217-22).

Lorsque l'on prépare l'huile polyinsaturée polymérisée utilisée pour produire les compositions de l'invention, pour réduire la durée de la polymérisation et donc le risque de former des produits de dégradation indésirables, on peut aussi prévoir de catalyser la polymérisation de l'huile polyinsaturée de départ par des métaux, comme par exemple le zinc, le plomb, l'étain ou le cuivre, sous la forme de nitrates, de chlorures ou de stéarates, ou encore le manganèse sous la forme d'oxyde ou d'un sel. A cet égard, on peut citer par exemple le chauffage pendant 6 heures de l'huile de lin avec du nitrate de cuivre (II) en une proportion de 0,5 à 2 % en poids par rapport à l'huile de départ décrit par Sil S. and Koley S. N., Department of Chemical Technology, Univ. of Calcutta (1987) 37(8), 15-22].

Parmi les catalyseurs métalliques mis en jeu pour diminuer la durée de la réaction, il peut être avantageux d'utiliser un sel ou le dioxyde de manganèse MnO₂, par exemple en une proportion de 0,5 à 2 % en poids par rapport à l'huile de départ. De tels catalyseurs peuvent en effet être laissés dans le produit final sans que cela entraîne des problèmes de toxicité ou de compatibilité avec les milieux dans lesquels l'additif sera finalement utilisé.

Dans tous les cas, pour pouvoir être utilisées dans le procédé de fabrication selon l'invention, les huiles polymérisées ont avantageusement une viscosité dynamique à 20 °C de 5 à 65 Pa.s et de préférence de 10 à 20 Pa.s. Elles présentent en général un indice d'acide de 8 à 20.

On donne ci-après, à titre d'exemple, la composition des oligomères d'acides gras contenus dans une huile de lin polymérisée possédant une viscosité dynamique à 20 °C de 65 Pa.s :
- acides gras monomères : 44,10 % en poids
- acides gras dimères : 32,30 % en poids
- acides gras trimères : 14,50 % en poids
- oligomères supérieurs : 9,10 % en poids

Ces valeurs ont été obtenues après méthanolyse de l'huile polymérisée et la séparation des esters de méthyle des différents acides gras (monomères, dimères, trimères et oligomères supérieurs) a été réalisée par chromatographie par perméation sur gel (GPC). L'indice d'acide de l'huile polymérisée est égal à 16 mg de KOH/g.

Le produit de la réaction de polymérisation, après méthanolyse, peut être purifié par distillation afin d'en éliminer la fraction d'esters correspondant aux acides gras monomères. On obtient alors un mélange qui comprend environ 1 % d'acides monomères, environ 75 % d'acides dimères, environ 19 % d'acides trimères et environ 5 % d'oligomères supérieurs.

Par ailleurs, on s'est aperçu qu'il était possible d'améliorer les propriétés des compositions de l'invention en soumettant l'huile polymérisée, dans une étape (b) facultative effectuée avant la réaction avec l'aminoalcool, à une opération d'entraînement à la vapeur d'eau sèche ayant pour effet une désodorisation de l'huile polymérisée et l'élimination des produits de dégradation qui pourraient être présents dans les huiles polymérisées et poser des problèmes vis-à-vis de certains milieux dans lesquels les compositions finales peuvent être utilisées.

Pour réaliser ce traitement, on fait passer sur l'huile polymérisée à traiter un courant de vapeur d'eau sèche en une quantité de 5 à 30 % en poids par rapport à l'huile, par exemple à une température de 180 à 250 °C, sous un vide de 7 à 2,5 kPa et pendant une durée de 1 à 5 heures.

L'étape (c) du procédé de préparation des compostions de l'invention met en oeuvre la réaction de l'huile polymérisée, éventuellement après traitement par entraînement à la vapeur d'eau, avec un excès d'au moins un aminoalcool comprenant au moins une fonction hydroxyle et au moins une fonction amine tertiaire. Comme aminoalcool, on peut utiliser par exemple la triéthanolamine.

Cette réaction peut être effectuée à une température de 100 à 200 °C et de préférence 110 à 160 °C, de préférence sans catalyseur avec élimination de l'eau au fur et à mesure qu'elle se forme, soit par utilisation d'un tiers solvant pour obtenir un azéotrope, soit par opération sans solvant, mais par élimination de l'eau par distillation sous pression réduite (voir par exemple le brevet US-A-2 089 212 et l'article de Harry Kroll et Herbert Nadeau dans J.A.O.C.S. 34, 323-326, juin 1957). La réaction peut également être catalysée, ce qui diminue sensiblement sa durée. Comme catalyseurs, on utilise généralement des alcoolates alcalins de type méthylate ou éthylate de lithium, sodium ou potassium. Le temps de réaction est alors de 15 à 200 minutes ; de préférence, la réaction est arrêtée après 100 minutes.

Le rapport molaire de l'aminoalcool sur l'huile polymérisée, ramenée aux moles d'acides gras qu'elle contient, est en général de 1/1 à 2/1, de préférence de l'ordre de 1,5/1.

Le produit obtenu par le procédé de l'invention consiste en une composition comprenant principalement des composés à fonctions esters et amines, notamment sous forme d'ester-amines, ainsi que des monoglycérides et des diglycérides, formés à partir des acides gras monomères, dimères, trimères et/ou tétramères contenus dans l'huile polyinsaturée polymérisée. Il peut être utilisé directement sans aucune purification, soit tel quel, soit après dilution dans un solvant adapté à l'application émulsifiante choisie. Les solvants compatibles utilisables peuvent être choisis parmi les solvants aromatiques, comme par exemple le toluène ou les xylènes, ou les coupes de solvants aromatiques, les esters de monoalcools de C1 à C8 et du mélange d'acides gras de C6 à C22 dérivant de l'huile de ricin, les esters de monoalcools de C1 à C8 d'acides gras de C6 à C22 hydroxylés obtenus par voie chimique et tous esters produits par l'ouverture de la liaison époxyde d'esters mono- ou polyinsaturés époxydés.

Les compositions de l'invention trouvent une utilisation particulière comme additifs dispersants d'hydrates dans des effluents pétroliers destinés à réduire la tendance à l'agglomération desdits hydrates. Dans cette utilisation, ces compositions sont ajoutées dans le fluide à traiter à des concentrations allant en général de 0,1 à 5 % en masse, de préférence de 0,2 à 2 % en masse, par rapport à l'eau.

Les exemples suivants illustrent l'invention. Les Exemples 1, 3 et 4 sont donnés à titre de comparaison.

### EXEMPLE 1 (comparatif)

Dans un ballon d'un litre, équipé d'une agitation mécanique et chauffé par l'intermédiaire d'un bain d'huile, on introduit sous atmosphère d'azote 325 g (0,37 mole, comptée en équivalent de triglycérides) d'une huile de lin polymérisée possédant une viscosité dynamique de 10 Pa.s à 20 °C, avec 175g de diéthanolamine (1,66 moles).

La composition pondérale en acides gras et oligomères d'acides gras de l'huile de lin polymérisée de départ est la suivante :
- acides gras monomères : 48,8 %
- acides gras dimères : 32,4 %
- acides gras trimères : 13,0 %
- oligomères supérieurs : 5,8 %

Son indice d'acide est égal à 10.

On chauffe le mélange jusqu'à 160 °C. On introduit une solution méthanolique de méthylate de sodium à 30 % en poids. Après 15 à 20 minutes de réaction à 160 °C, le produit devient homogène et limpide. On maintient cette température de 160 °C pendant 100 minutes avant de refroidir le mélange.

On dilue le produit dans le ballon de réaction en introduisant 500 g d'un ester méthylique d'huile de ricin.

Le mélange ainsi obtenu est un liquide jaune, d'une densité à 25 °C de 0,950, d'une viscosité à 20 °C de 212 mPa.s, d'un point éclair supérieur à 60 °C et d'un point d'écoulement inférieur à 20 °C.

### EXEMPLE 2

Dans un ballon d'un litre, équipé d'une agitation mécanique et chauffé par l'intermédiaire d'un bain d'huile, on introduit sous atmosphère d'azote 325 g de la même huile de lin polymérisée que celle utilisée dans l'Exemple 1, avec 247 g de triéthanolamine (1,66 moles).

On chauffe le mélange jusqu'à 160 °C. On introduit une solution méthanolique de méthylate de sodium à 30% en poids. Après 15 à 20 minutes de réaction à 160 °C, le produit devient homogène et limpide. On maintient cette température de 160 °C pendant 100 minutes avant de refroidir le mélange.

On dilue le produit dans le ballon de réaction en introduisant 572 g d'un ester méthylique d'huile de ricin.

Le mélange obtenu présente une densité à 25°C de 0,955, une viscosité dynamique à 20 °C de 237 mPa.s, un point éclair supérieur à 60 °C et un point d'écoulement inférieur à 20 °C.

Dans les exemples suivants, on teste l'efficacité des produits préparés comme décrit les Exemples 1 et 2 en tant qu'additifs pour disperser les hydrates dans un effluent pétrolier. On a simulé le transport de fluides formant des hydrates, tels que des effluents pétroliers et on a procédé à des essais de formation d'hydrates à partir de gaz, de condensat et d'eau, à l'aide de l'appareillage décrit ci-après.

L'appareillage comporte une boucle de 10 mètres constituée de tubes de diamètre intérieur égal à 7,7 mm ; un réacteur de 2 litres comprenant une entrée et une sortie pour le gaz, une aspiration et un refoulement pour le mélange : condensat, eau et additif initialement introduit. Le réacteur permet de mettre la boucle sous pression.

Des tubes de diamètre analogue à ceux de la boucle assurent la circulation des fluides de la boucle au réacteur, et inversement, par l'intermédiaire d'une pompe à engrenages placée entre les deux. Une cellule saphir intégrée dans le circuit permet une visualisation du liquide en circulation, et donc des hydrates, s'ils se sont formés.

Pour déterminer l'efficacité des additifs selon l'invention, on introduit les fluides (eau, huile, additif) dans le réacteur ; l'installation est ensuite portée sous une pression de 70 bar. L'homogénéisation des liquides est assurée par leur circulation dans la boucle et le réacteur, puis uniquement dans la boucle. En suivant les variations de perte de charge et de débit, on impose une rapide diminution de la température, de 17 °C à 4 °C (température inférieure à la température de formation des hydrates), celle-ci est ensuite maintenue à cette valeur.

La durée des tests peut varier de quelques minutes à plusieurs heures : un additif performant permet de maintenir la circulation de la suspension d'hydrates avec une perte de charge et un débit stables.

### EXEMPLE 3 (comparatif)

Dans cet exemple, on opère avec un fluide composé en volume de 10 % d'eau et d'une huile brute.

La composition pondérale de l'huile brute est la suivante :
- pour les molécules ayant moins de 20 atomes de carbone: 47 % d'hydrocarbures saturés et 14 % d'aromatiques ; et
- pour les molécules ayant au moins 20 atomes de carbone : 39 % d'un mélange d'hydrocarbures saturés, d'aromatiques, de résines et d'asphaltènes.

Le gaz utilisé comprend en volume 98 % de méthane et 2 % d'éthane. L'expérimentation est conduite sous une pression de 7 MPa, maintenue constante par apport de gaz. Dans ces conditions, on observe la formation d'un bouchon dans le serpentin, quelques minutes après le début de la formation des hydrates (à une température d'environ 10,8 °C) : les hydrates forment un bloc et la circulation du fluide devient impossible.

### EXEMPLE 4 (comparatif)

Dans cet exemple, on opère comme dans l'Exemple 3 comparatif, avec le même fluide, le même gaz, et à la même pression, mais on ajoute au fluide en circulation 1 % en masse par rapport à l'eau du produit fabriqué dans l'Exemple 1. Dans ces conditions, on observe une augmentation de la perte de charge lors de la formation des hydrates (à une température d'environ 10°C), suivie de sa diminution et de sa stabilisation pendant plus de 12 heures à une température de 4 °C.

### EXEMPLE 5

Dans cet exemple, on opère comme dans l'Exemple 3 comparatif, avec le même fluide, le même gaz, et à la même pression, mais on ajoute au fluide en circulation 1 % en masse par rapport à l'eau du produit fabriqué dans l'Exemple 2. Dans ces conditions, on observe une augmentation de la perte de charge lors de la formation des hydrates (à une température d'environ 10°C), suivie de sa diminution et de sa stabilisation pendant plus de 24 heures à une température de 4 °C.

## Revendications

1. Composition comprenant au moins des composés à fonctions esters et amines sous la forme d'ester-amines, ainsi que des sels d'amines, des mono- et des diglycérides, formés à partir des acides gras monomères, dimères, trimères et/ou tétramères contenus dans une huile naturelle, végétale ou animale polyinsaturée polymérisée, et au moins un composé comportant au moins une fonction hydroxyle et au moins une fonction amine tertiaire, mais ne comprenant pas d'ester-amides,
**caractérisée en ce qu'**elle est obtenue par un procédé qui comprend les étapes suivantes :
a) on dispose de (ou on prépare) une huile polymérisée par polymérisation d'une huile végétale ou animale polyinsaturée ;
b) éventuellement on traite ladite huile polymérisée par entraînement à la vapeur d'eau ; et
c) on fait réagir l'huile polymérisée avec un excès d'au moins un composé comportant au moins une fonction hydroxyle et au moins une fonction amine tertiaire, en présence ou non de catalyseur.

2. Composition selon la revendication 1 **caractérisée en ce que** ledit composé comportant au moins une fonction hydroxyle et au moins une fonction amine tertiaire est la triéthanolamine.

3. Procédé de préparation d'une composition selon l'une des revendications 1 ou 2 **caractérisé en ce qu'**il comprend les étapes suivantes :
a) on dispose de (ou on prépare) une huile polymérisée par polymérisation d'une huile végétale ou animale polyinsaturée ;
b) éventuellement on traite ladite huile polymérisée par entraînement à la vapeur d'eau ; et
c) on fait réagir l'huile polymérisée avec un excès d'au moins un composé comportant au moins une fonction hydroxyle et au moins une fonction amine tertiaire, en présence ou non de catalyseur.

4. Procédé selon la revendication 3 **caractérisé en ce que**, dans l'étape (a), l'huile polymérisée est obtenue par polymérisation d'une huile à teneur élevée en acides polyinsaturés et présente une viscosité dynamique de 5 à 65 Pa.s à 20 °C.

5. Procédé selon la revendication 3 ou 4 **caractérisé en ce que** dans l'étape (a), l'huile polyinsaturée est polymérisée thermiquement.

6. Procédé selon la revendication 3 ou 4 **caractérisé en ce que**, dans l'étape (a), l'huile polyinsaturée est polymérisée par voie catalytique.

7. Procédé selon la revendication 6 **caractérisé en ce que** le catalyseur utilisé est le dioxyde de manganèse.

8. Procédé selon l'une des revendications 3 à 7 **caractérisé en ce que** l'huile de départ est de l'huile de lin.

9. Procédé selon la revendication 3 à 8 **caractérisé en ce que**, dans l'étape (b), on fait passer sur l'huile polymérisée un courant de vapeur d'eau sèche en une quantité de 5 à 30 % en poids par rapport à l'huile, à une température de 180 à 250 °C, sous un vide de 7 à 2,5 kPa et pendant une durée de 1 à 5 heures.

10. Procédé selon l'une des revendications 3 à 9 **caractérisé en ce que**, dans l'étape (c), le rapport molaire de l'aminoalcool à l'huile polymérisée, ramenée aux moles d'acides gras qu'elle contient, est de 1/1 à 2/1.

11. Procédé selon l'une des revendications 3 à 10 **caractérisé en ce que** le composé comportant au moins une fonction hydroxyle et au moins une fonction amine tertiaire utilisé dans l'étape (c) est la triéthanolamine.

12. Procédé selon l'une des revendications 3 à 11 **caractérisé en ce que** le produit de réaction de l'étape (c) est dilué dans un solvant.

13. Procédé selon la revendication 12 **caractérisé en ce que** ledit solvant est choisi parmi les solvants aromatiques, comme par exemple le toluène ou les xylènes, ou les coupes de solvants aromatiques, les esters de monoalcools de C1 à C8 et du mélange d'acides gras de C6 à C22 dérivant de l'huile de ricin, les esters de monoalcools de C1 à C8 d'acides gras de C6 à C22 hydroxylés obtenus par voie chimique et tous esters produits par l'ouverture de la liaison époxyde d'esters mono- ou polyinsaturés époxydés.

14. Procédé selon l'une des revendications de 3 à 13 **caractérisé en ce que**, dans l'étape (c), la réaction est achevée après un temps de chauffage de 15 à 200 minutes.

15. Procédé selon l'une des revendications 3 à 14 **caractérisé en ce que**, dans l'étape (c), la température de réaction est de 100 à 200 °C.

16. Utilisation d'une composition selon l'une des revendications 1 ou 2 ou obtenue par un procédé selon l'une des revendications 3 à 15 comme additif dispersant d'hydrates dans des effluents pétroliers.

## Patentansprüche

1. Zusammensetzung, umfassend wenigstens Verbindungen mit Ester- und Aminfunktionen in Form von Esteraminen sowie Aminsalzen, Mono- und Diglyceriden, gebildet ausgehend von monomeren, dimeren, trimeren und/oder tetrameren Fettsäuren, die in einem polymerisierten polyungesättigten natürlichen pflanzlichen oder tierischen Öl enthalten sind, und eine Verbindung, die wenigstens eine Hydroxylfunktion und wenigstens eine tertiäre Aminfunktion umfasst, aber keine Esteramide umfasst, **dadurch gekennzeichnet, dass** sie durch ein Verfahren erhalten wird, das die.folgenden Stufen umfasst:
a) man verfügt über (oder man stellt her) ein polymerisiertes Öl durch Polymerisation eines pflanzlichen oder tierischen polyungesättigten Öls;
b) man behandelt das polymerisierte Öl gegebenenfalls durch Mitziehen mit Wasserdampf; und
c) man lässt das polymerisierte Öl mit einem Überschuss wenigstens einer Verbindung, die wenigstens eine Hydroxylfunktion und wenigstens eine tertiäre Aminfunktion umfasst, gegebenenfalls in Gegenwart von Katalysator reagieren.

2. Zusammensetzung nach Anspruch 1, **dadurch gekennzeichnet, dass** die Verbindung, die wenigstens eine Hydroxylfunktion und wenigstens eine tertiäre Aminfunktion umfasst, ein Triethanolamin ist.

3. Verfahren zur Herstellung einer Zusammensetzung nach einem der Ansprüche 1 oder 2, **dadurch gekennzeichnet, dass** es die folgenden Stufen umfasst:
a) man verfügt über (oder man stellt her) ein polymerisiertes Öl durch Polymerisation eines pflanzlichen oder tierischen polyungesättigten Öls;
b) man behandelt gegebenenfalls das polymerisierte Öl durch Mitziehen mit Wasserdampf; und
c) man lässt das polymerisierte Öl mit einem Überschuss wenigstens einer Verbindung, die wenigstens eine Hydroxylfunktion und wenigstens eine tertiäre Aminfunktion umfasst, gegebenenfalls in Gegenwart von Katalysator reagieren.

4. Verfahren nach Anspruch 3, **dadurch gekennzeichnet, dass** in der Stufe (a) das polymerisierte Öl durch Polymerisation eines Öls mit hohem Gehalt an polyungesättigten Säuren erhalten wird und eine dynamische Viskosität von 5 bis 65 Pa.s bei 20°C aufweist.

5. Verfahren nach Anspruch 3 oder 4, **dadurch gekennzeichnet, dass** bei der Stufe (a) das polyungesättigte Öl thermisch polymerisiert wird.

6. Verfahren nach Anspruch 3 oder 4, **dadurch gekennzeichnet, dass** in der Stufe (a) das polyungesättigte Öl auf katalytischem Weg polymerisiert wird.

7. Verfahren nach Anspruch 6, **dadurch gekennzeichnet, dass** der verwendete Katalysator Mangandioxid ist.

8. Verfahren nach einem der Ansprüche 3 bis 7, **dadurch gekennzeichnet, dass** das Ausgangsöl Leinöl ist.

9. Verfahren nach Anspruch 3 bis 8, **dadurch gekennzeichnet, dass** man in der Stufe (b) auf dem polymerisierten Öl einen trockenen Wasserdampfstrom in einer Menge von 5 bis 30 Gew.-% im Verhältnis zum ÖL bei einer Temperatur von 180 bis 250°C unter einem Vakuum von 7 bis 2,5 kPa und für eine Dauer von 1 bis 5 Stunden passieren lässt.

10. Verfahren nach einem der Ansprüche 3 bis 9, **dadurch gekennzeichnet, dass** in der Stufe (c) das Molverhältnis des Aminoalkohols zum polymerisierten Öl zurückgeführt auf Fettsäuremolanteile, die es enthält 1/1 bis 2/1 ist.

11. Verfahren nach einem der Ansprüche 3 bis 10, **dadurch gekennzeichnet, dass** die in der Stufe (c) verwendete Verbindung, die wenigstens eine Hydroxylfunktion und wenigstens eine tertiäre Aminfunktion umfasst, ein Triethanolamin ist.

12. Verfahren nach einem der Ansprüche 3 bis 11, **dadurch gekennzeichnet, dass** das Reaktionsprodukt der Stufe (c) in einem Lösungsmittel verdünnt wird.

13. Verfahren nach Anspruch 12, **dadurch gekennzeichnet, dass** das Lösungsmittel gewählt wird unter den aromatischen Lösungsmitteln wie z.B. Toluol oder Xylolen, den aromatischen Lösungsmittelfraktionen, den Estern von C1- bis C8-Monoalkoholen und von Gemisch von C6- bis C22-Fettsäuren, abgeleitet von Rizinusöl, den Estern von C1- bis C8-Fettsäuren von C6- bis C22-Hydroxylen, erhalten auf chemischem Weg, und allen Estern, die durch Öffnung der Epoxidbindung von epoxidierten Mono- und Polyungesättigten Estern erzeugt sind.

14. Verfahren nach einem der Ansprüche 3 bis 13, **dadurch gekennzeichnet, dass** in Stufe (c) die Reaktion nach einer Heizzeit von 15 bis 200 Minuten vollendet wird.

15. Verfahren nach einem der Ansprüche 3 bis 14, **dadurch gekennzeichnet, dass** in Stufe (c) die Reaktionstemperatur 100 bis 200°C beträgt.

16. Verwendung einer Zusammensetzung gemäß einem der Ansprüche 1 oder 2 oder erhalten durch ein Verfahren gemäß einem der Ansprüche 3 bis 15 als Hydratdispersionszusatz in Erdölabströmen.

## Claims

1. Composition comprising at least compounds with ester and amine functions in the form of ester-amines, amines, as well as the salts of amines monoglycerides and diglycerides, formed from monomeric, dimeric, trimeric and/or tetrameric fatty acids contained in a polymerised polyunsaturated natural, vegetable or animal oil, and at least one compound containing at least one hydroxy function and at least one tertiary amine function, but not comprising ester-amides, **characterized in that** it is obtained by a process which comprises the following stages:
a) use (or preparation) of a polymerised oil by polymerisation of a polyunsaturated vegetable or animal oil;
b) optionally, treatment of said polymerised oil by entrainment with water vapour; and
c) reaction of the polymerised oil with an excess of at least one compound containing at least one hydroxyl function and at least one tertiary amine function, in the presence or not of a catalyst.

2. Composition according to claim 1 **characterized in that** said compound containing at least one hydroxyl function and at least one tertiary amine function is triethanolamine.

3. Preparation process for a composition according to one of claims 1 and 2 **characterized in that** it comprises the following stages:
a) use (or preparation) of a polymerised oil by polymerisation of a polyunsaturated vegetable or animal oil;
b) optionally, treatment of said polymerised oil by entrainment with water vapour; and
c) reaction of the polymerised oil with an excess of at least one compound containing at least one hydroxyl function and at least one tertiary amine function, in the presence or not of a catalyst.

4. A process according to claim 3 **characterized in that**, in stage (a), the polymerised oil is obtained by polymerisation of an oil with a high level of polyunsaturated acids and has a dynamic viscosity of 5 to 65 Pa.s at 20°C.

5. Process according to claim 3 or 4 **characterized in that**, in stage (a), the polyunsaturated oil is polymerised thermally.

6. Process according to claim 3 or 4 **characterized in that**, in stage (a), the polyunsaturated oil is polymerised by catalytic route,

7. Process according to claim 6 **characterized in that** the catalyst used is manganese dioxide.

8. Process according to one of claims 3 to 7 **characterized in that** the starting oil is linseed oil.

9. Process according to claim 3 to 8 **characterized in that**, in stage (b), a stream of dry water vapour is passed over the polymerised oil, in a quantity of 5 to 30% by weight relative to the oil, at a temperature of 180 to 250°C, under a vacuum of 7 to 2.5 kPa and for a period of 1 to 5 hours.

10. Process according to one of claims 3 to 9 **characterized in that**, in stage (c), the molar ratio of the aminoalcohol to the polymerised oil, expressed as the moles of fatty acids which it contains, is from 1/1 to 2/1.

11. Process according to one of claims 3 to 10 **characterized in that** the compound containing at least one hydroxyl function and at least one tertiary amine function used in stage (c) is triethanolamine.

12. Process according to one of claims 3 to 11 **characterized in that** the reaction product of stage (c) is diluted in a solvent.

13. Process according to claim 12 **characterized in that** said solvent is chosen from the aromatic solvents, such as for example toluene or xylenes, or the fractions of aromatic solvents, the esters of C1 to C8 monoalcohols and of the mixture of C6 to C22 fatty acids deriving from castor oil, the esters of C1 to C8 monoalcohols of hydroxylated C6 to C22 fatty acids obtained by chemical route and all esters produced by the opening of the epoxide bond of epoxidated mono-or polyunsaturated esters.

14. Process according to one of claims 3 to 13 **characterized in that**, in stage (c), the reaction is completed after a heating time of 15 to 200 minutes.

15. Process according to one of claims 3 to 14 **characterized in that**, in stage (c), the reaction temperature is from 100 to 200°C.

16. Use of a compound according to one of claims 1 and 2 or obtained by a process according to one of claims 3 to 15 as a dispersing additive for hydrates in oil effluents.
